**Europäisches Patentamt**

**European Patent Office**

**Office européen des brevets**

(19)

(11) Veröffentlichungsnummer: **0 452 610 A2**

## (12) EUROPÄISCHE PATENTANMELDUNG

(21) Anmeldenummer: 90890335.4

(22) Anmeldetag: **18.12.90**

(51) Int. Cl.5: **C08B 1/00**, C08J 3/09, //C08L1:02

(30) Priorität: **20.04.90 AT 926/90**

(43) Veröffentlichungstag der Anmeldung: **23.10.91 Patentblatt 91/43**

(84) Benannte Vertragsstaaten: **AT BE CH DE DK ES FR GB GR IT LI LU NL SE**

(71) Anmelder: **LENZING AKTIENGESELLSCHAFT Werkstrasse 1 A-4860 Lenzing(AT)**

(72) Erfinder: **Eichinger, Dieter, Dr. Oberstadtgries 5 A-4840 Vöcklabruck(AT)** Erfinder: **Kirchgatterer, Gallus Altlenzing 37 A-4860 Lenzing(AT)** Erfinder: **Astegger, Stefan, Dr. Feldgasse 14**
**A-4840 Vöcklabruck(AT)** Erfinder: **Weinzierl, Karin, Dr. Ausserungnach 2 A-4850 Timelkam(AT)** Erfinder: **Zikeli, Stefan Schacha 14 A-4844 Regau(AT)** Erfinder: **Firgo, Heinrich, Dr. Oberstadtgries 7 A-4840 Vöcklabruck(AT)** Erfinder: **Wolschner, Bernd, Dr. Hatschekstrasse 8 A-4840 Vöcklabruck(AT)**

(74) Vertreter: **Müllner, Erwin, Dr. et al Patentanwälte, Dr. Erwin Müllner, Dipl.-Ing. Werner Katschinka, Dr. Martin Müllner, Postfach 159, Weihburggasse 9 A-1010 Wien(AT)**

(54) Verfahren zur Herstellung einer Lösung von Cellulose in N-Methylmorpholin-N-oxid und Wasser.

(57) Um eine Lösung von Cellulose in N-Methylmorpholin-N-oxid und Wasser herzustellen, die im Vergleich zu bekannten Lösungen einen höheren Wassergehalt bei gegebenem Cellulosegehalt hat, wird eine Mischung aus den drei Komponenten Scherraten von 400-3000 $s^{-1}$, vorzugsweise 500-800 $s^{-1}$, unterworfen. Durch dieses Verfahren können Lösungen hergestellt werden, die folgende Bedingungen erfüllen ($c_{Cell}$ = Masseanteil Cellulose; $c_{H_2O}$ = Masseanteil Wasser):

$$c_{Cell} > 0,3469 - 1,695\ c_{H_2O} + 0,0081\ \sqrt{1,65 + 0,1(100\ c_{H_2O} - 12,76)^2} \quad (V)$$

$$c_{Cell} \leq 0,58 - 2,23\ c_{H_2O}$$

EP 0 452 610 A2

Die vorliegende Erfindung betrifft ein Verfahren zur Herstellung einer Lösung von Cellulose in N-Methylmorpholin-N-oxid und Wasser, bei dem die drei Komponenten miteinander vermischt werden, sowie eine Lösung von Cellulose in N-Methylmorpholin-N-oxid und Wasser.

Ein derartiges Verfahren ist beispielsweise aus der US-PS 4 196 282 bekannt. Um die maximale Cellulosekonzentration experimentell zu ermitteln, wurde gemäß dieser US-PS das Dreistoffsystem als heterogene Stoffmischung angesetzt und durch Erhöhung der Temperatur, Rühren und Abdampfen von Wasser daraus eine homogene Spinnmasse hergestellt. Es hat sich nämlich gezeigt, daß die maximale Cellulosekonzentration sinkt, wenn der Wasseranteil steigt, bzw. daß es - bei gegebener Cellulosekonzentration - eine maximal zulässige Wasserkonzentration gibt. Sinkt nun während des Abdampfens von Wasser die Wasserkonzentration, so geht die Cellulose irgendwann vollständig in Lösung. Aus den zu diesem Zeitpunkt herrschenden Massenanteilen in der Lösung ergibt sich bei einem bestimmten Wasseranteil der zugehörige maximale Celluloseanteil.

Durch umfangreiche Serienversuche konnten gemäß der zitierten US-PS folgende Zusammenhänge zwischen dem Massenanteil bzw. der Konzentration der Cellulose ($c_{Cell}$) und dem Massenanteil bzw. der Konzentration des Wassers

$$(c_{H_2O})$$

festgestellt werden:

$$c_{Cell} \leq 0,3469 - 1,695\ c_{H_2O} \qquad\qquad (I)$$

$$c_{Cell} \leq 0,3469 - 1,695\ c_{H_2O} + 0,0081\ \sqrt{1,65 + 0,1(100\ c_{H_2O} - 12,76)^2} \quad (II)$$

Diese beiden Ungleichungen sind in Fig. 5 der US-PS dargestellt, wobei die Kurve A Ungleichung II und die Kurve B Ungleichung I entspricht.

Ist die Ungleichung I erfüllt (dann ist die Ungleichung II automatisch auch erfüllt), so löst sich die Cellulose mit Sicherheit in N-Methylmorpholin-N-oxid (im folgenden NMMO genannt) und Wasser. Ist nur die Ungleichung II, nicht jedoch die Ungleichung I erfüllt, so tritt nur mit einer gewissen Wahrscheinlichkeit, nicht jedoch mit Sicherheit, vollständige Lösung der Cellulose ein.

In der zitierten US-PS sind auch untere Grenzen für den Wasser- bzw. Cellulosegehalt angegeben (Kurven C und D in Fig. 5). Sinkt nämlich der Wassergehalt zu sehr ab, kann die Lösung durch Scherinduktion auch bei sehr hohen Temperaturen auskristallisieren. Eine solche Lösung läßt sich auch durch weiteres Anheben der Temperatur nicht mehr verarbeiten. Außerdem kommt man bei niedrigem Wassergehalt in einen Temperatur- und Konzentrationsbereich, der nahe der Zersetzungs- und Explosionsgrenze des Systems NMMO-Cellulose liegt. Nach DSC-Messungen liegt der Beginn der Zersetzung knapp oberhalb 170° C. Um die Sicherheit eines Verfahrens zu gewährleisten, muß aber der Abstand zur Initialtemperatur der Zersetzung so groß wie möglich sein.

Bei der Lösung von Cellulose in NMMO und Wasser hat das Wasser mehrere Funktionen. Einer der Vorteile ist, daß in einer Mischung von NMMO und Wasser mehr Cellulose gelöst werden kann als in reinem NMMO. Dadurch wird eine Extrusion der Lösung z.B. zum Spinnen von Fäden möglich. Der Wassergehalt darf allerdings auch nicht zu hoch sein, weil eine Erhöhung des Wassergehaltes die maximal mögliche Cellulosekonzentration linear herabsetzt (Ungleichung I).

Wenn die Lösung extrudiert wird, wird danach eine wässerige NMMO-Lösung als Fällmittel eingesetzt. Das Fällbad kann in einem Chemikalienkreislauf aufkonzentriert und gereinigt und anschliessend zur Lösungsherstellung rückgeführt werden.

Die gesamte Wirtschaftlichkeit und Umweltverträglichkeit des Verfahrens ist davon abhängig, wieweit man den gekoppelten NMMO/Wasser-Kreislauf im Griff hat. Gelingt es, das sehr teure Lösungsmittel NMMO durch Wasser in der Spinnmasse teilweise zu ersetzen, so kann man direkte Einsparungen bei den Verfahrenskosten verzeichnen.

Verwendet man Lösungen mit erhöhtem Wassergehalt zur Extrusion, so kann man außerdem Fällbad sparen.

Aus den dargelegten Gründen hat sich die Erfindung die Aufgabe gestellt, ein Verfahren zur Herstellung einer Lösung von Cellulose in NMMO und Wasser mit erhöhtem Wassergehalt bereitzustellen, wodurch die Sicherheit des Verfahrens und die Initialtemperatur der Zersetzung erhöht wird und wodurch Einsparungen an teurem Lösungsmittel und Fällungsmittel, das regeneriert werden muß, erzielt werden.

Diese Aufgabe wird durch ein Verfahren der eingangs genannten Art erfindungsgemäß dadurch gelöst, daß die Mischung Scherraten von 400 - 3000 $s^{-1}$, vorzugsweise 500-800 $s^{-1}$, unterworfen wird und daß der Masseanteil Cellulose $c_{Cell}$ und der Masseanteil Wasser

$$c_{H_2O}$$

folgende Bedingung erfüllen:

$$c_{Cell} > 0,3469-1,695 \ c_{H_2O} \qquad (III)$$

Es wurde nämlich überraschenderweise gefunden, daß sich wesentlich mehr Cellulose bei gegebener Wasserkonzentration löst, wenn die Mischung hohen Scherraten unterworfen wird. Es kommt dabei tatsächlich nicht so sehr auf die Rührenergie an als auf die dadurch erzielten Scherraten.

Das eingesetzte NMMO kann dabei entweder technisch gereinigtes oder bereits im Kreis geführtes NMMO (wie oben beschreiben) sein.

Es ist zweckmäßig, wenn die Temperatur, während die Mischung den Scherraten unterworfen wird, 70-120° C, vorzugsweise etwa 100° C beträgt. Bei diesen Temperaturen löst sich die Cellulose besonders gut, und von der Zersetzungstemperatur des NMMO ist man noch ausreichend weit entfernt.

Vorzugsweise wird einer der Komponenten oder der Mischung 0-1% eines bekannten Stabilisators, wie Gallussäure und deren Ester, speziell Gallussäurepropylester, Brenzkatechin, Ellagsäure, Pyrrogallol, Oxalsäure, Phosphorsäure und Natriumhexametaphosphat zugesetzt. Derartige Stabilisatoren verhindern bzw. vermindern den Zerfall von NMMO und den Abbau von Cellulose.

Die maximale Cellulosekonzentration, die mit dem erfindungsgemäßen Verfahren erzielt werden kann, läßt sich durch folgende Ungleichung ausdrücken:

$$c_{Cell} \leqslant 0,58-2,23 \ c_{H_2O} \qquad (IV)$$

Es soll daher auch eine Lösung von Cellulose in N-Methylmorpholin-N-oxid und Wasser geschützt sein, sofern der Masseanteil Cellulose $c_{Cell}$ und der Masseanteil

$$c_{H_2O}$$

folgende Bedingungen erfüllen:

$$c_{Cell} > 0,3469-1,695 \ c_{H_2O} + 0,0081 \sqrt{1,65+0,1(100 \ c_{H_2O}-12,76)^2} \qquad (V)$$

$$c_{Cell} \leqslant 0,58 - 2,23 \ c_{H_2O} \qquad (IV)$$

Für die Ungleichung IV wurde von den Erfindern eine theoretische Erklärung gefunden, wobei sie durch diese Theorie nicht gebunden sein möchten. Die Theorie wird anhand der beiliegenden Zeichnungen näher erläutert. Es zeigt: Fig. 1 die maximale Löslichkeit von Cellulose in Abhängigkeit vom Wassergehalt; Fig. 2 ein Zweistoffdiagramm für das System NMMO/H$_2$O; und Fig. 3 das Ergebnis einer Röntgenstrukturanalyse von Cellotetrose und Anhydro-NMMO.

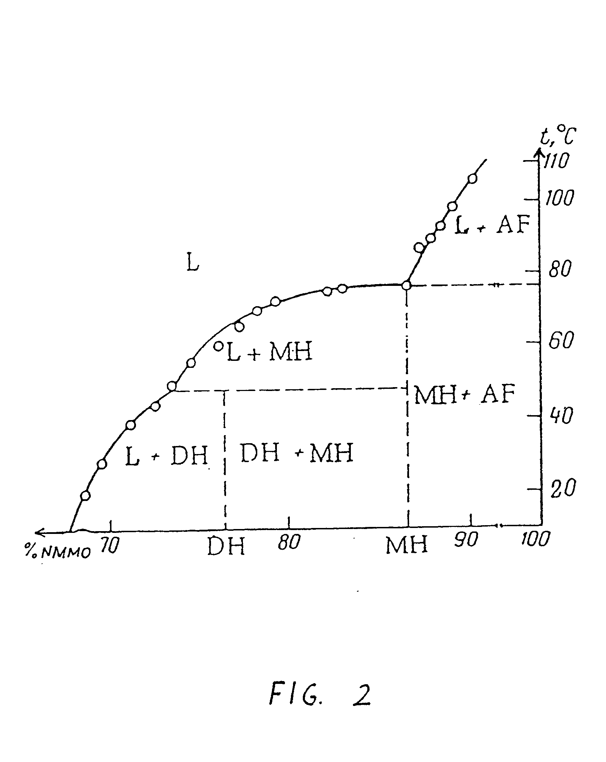

Es ist bekannt, daß das System NMMO/Wasser nicht nur ein Eutektikum zeigt, sondern zwei (s. Fig. 2). Zur Lösung von Cellulose war es bisher nur möglich, das Eutektikum, dem ein Monohydrat (MH) zugrunde liegt, auszunützen. Überraschenderweise ist es durch Einsatz hoher Scherraten auch möglich, das zweite Eutektikum, bei 26% Wasser und 74% NMMO, auszunützen. Der Schmelzpunkt dieses Eutektikums liegt bei 36° C; es entspricht einem molaren Verhältnis von 1 Mol NMMO zu 2,3 Mol Wasser (NMMO-2,3-Hydrat,DH).

Das NMMO-2,3 Hydrat ist deshalb vorteilhaft, weil bei der Lösungsbildung die Wassermoleküle durch Cell-OH-Moleküle ausgetauscht werden können. So zeigt z.B. eine Röntgenstrukturanalyse von Cellotetrose und Anhydro-NMMO (AF), daß nur eine Glucoseeinheit gebunden ist.

(S. Maia, E.R.; Peguy, A.; Perez, S.; Cellulose organic solutions.I. The structure of anhydrous NMMO and NMMO monyhydrate. Acta Crystallogr., Sect.B 1981, B37(10), 1858-62, Jan. 1, 1981.)

Unter der Annahme, daß auch das NMMO-2, 3 Hydrat auch in der flüssigen Phase (L) die Wassermoleküle beliebig durch Cell-OH auszutauschen in der Lage ist, können Lösungen mit wesentlich höherem Wasseranteil, als in der oben genannten US-PS 4 196 282 angeführt, erhalten werden.

Unter Berücksichtigung oben gemachter Annahmen, d.h. daß in einer Lösung das "freie" NMMO in Form von NMMO-(2 bis 2, 3H-Brückenbindung) (vgl. die eutektische Mischung in Fig. 2) vorliegt und daß jede Anhydroglucoseeinheit der Cellulose ein Anhydro-NMMO bindet, läßt sich der Lösebereich wie folgt erweitern: Die maximal mögliche Wasserkonzentration in einer NMMO-Cellulose-Wasser-Lösung ergibt sich aus dem Zweistoffdiagramm (Fig. 2), d.h. hier ist die Cellulosekonzentration = 0%:

$$c_{H_2O} = 26\% = 0,26$$

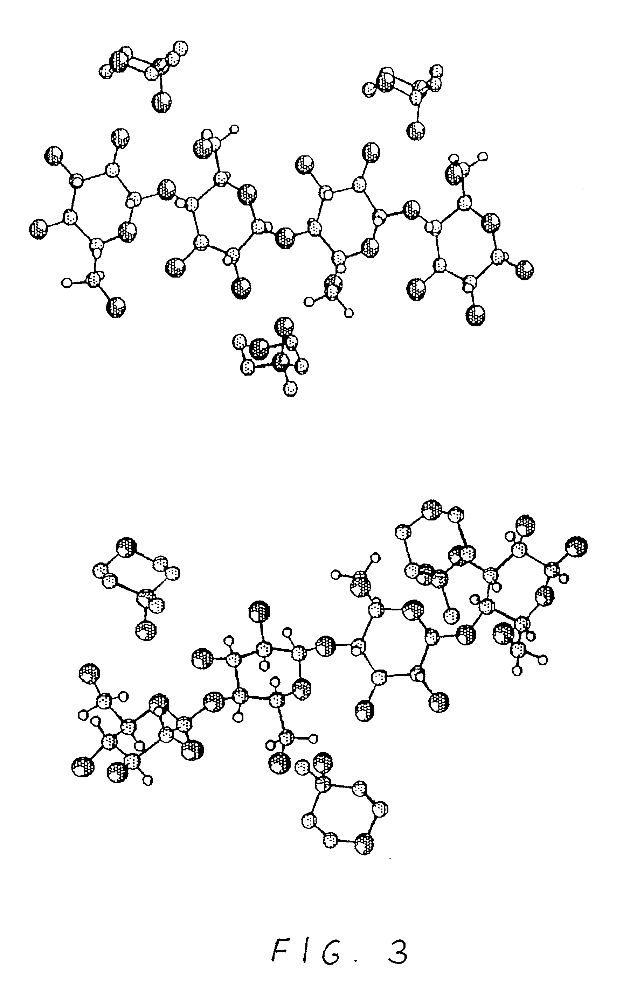

Die maximale Cellulosekonzentration (wasserfreie Lösung) ergibt sich aus Fig. 3, wonach jede Anhydroglucoseeinheit maximal ein NMMO zu binden vermag. D.h. das molare Verhältnis NMMO:Anhydroglucose beträgt 1.

$$(c_{Cell}/MM_{Anhydroglucose})/(c_{NMMO}/MM_{NMMO}) = 1$$

$$(c_{Cell}/162)/(c_{NMMO}/117) = 1$$

$$(c_{Cell}/c_{NMMO}) = 162/117 = 1,38$$

$$c_{Cell} = 1,38 * c_{NMMO}$$

$$c_{Cell} + c_{NMMO} = 100\% = 1$$

Aus diesen beiden Gleichungen ergibt sich:

$c_{NMMO} = 42\%$; $c_{Cell} = 58\%$

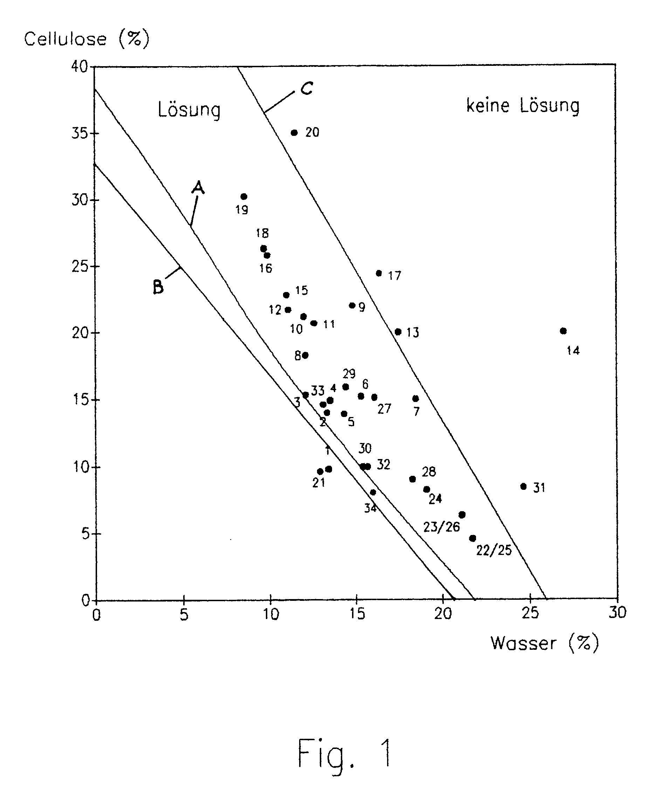

Daraus ergibt sich für die rechte Grenze (C) des Löslichkeitsbereiches in Fig. 1 durch lineare Interpolation:

$$c_{Cell} = 0,58 - 2,23 * c_{H_2O}$$

oder umgeformt:

$$c_{H_2O} = 0,26 - 0,448 * c_{Cell}$$

Außerdem muß gelten:

$$c_{NMMO} = 1 - c_{H_2O} - c_{Cell} - c_{Stabilisator}$$

In Fig. 1 sind außerdem die beiden Grenzkonzentrationen, die in der oben zitierten US-PS 4 196 282 angegeben sind, nämlich Kurven A und B in deren Fig. 5, eingezeichnet und ebenfalls mit A und B bezeichnet. Der Bereich zwischen den Kurven A bzw. B einerseits und C anderseits wird durch die vorliegende Erfindung erschlossen. In Fig. 1 sind weiters Punkte eingezeichnet, die den im folgenden beschriebenen Beispielen entsprechen.

In den Beispielen erfolgte die Bestimmung des Cellulosegehaltes gravimetrisch durch Ausfällen der Cellulose mit Wasser. Im Filtrat wird die NMMO-Konzentration potentiometrisch ermittelt. Die Bestimmung der Wasserkonzentration erfolgt nach Ausfällen der Cellulose mit Methanol im Filtrat mittels Karl-Fischer-Reagens.

Der Cellulose-DP wurde durch Errechnung des Zahlenmittels und Bestimmung der Grenzviskositätszahl nach der Cuen-Methode TAPPI T230 ermittelt. Gemessen wurde im Modus Oszillation (W = Winkelgeschwindigkeit).

Beurteilung der Lösung:

- optisch: unter dem Mikroskop
- viskosimetrisch: mitels eines Rotationsviskosimeters der Firma HAAKE, Typ RV20 System Platte-Platte (PQI, Spalt: 1mm, Meßtemperatur: 95°C, Oszillationsmodus).

Beispiele 1 bis 21:

In einem 31-Kneter, Typ: Werner & Pfleiderer, LUK 5 III-1, wurden die Komponenten: Cellulose, NMMO (aus Aceton umkristallisiert), Wasser und GPE (Gallussäurepropylester)als Stabilisator 15 bis 115 min bei 70°C bis 120°C (Tabelle 1) geknetet, bis eine unter dem Mikroskop durchsichtige Lösung entstanden ist.

Die genauen Versuchsparameter und die Ergebnisse sind in Tabelle 1 zusammengefaßt.

Die Beispiele 1 und 21 liegen im bekannten und nicht im erfindungsgemäßen Bereich. Sie wurden nur aufgenommen, um zu zeigen, daß die Verwendung eines Stabilisators auf alle Fälle sinnvoll ist, um den Celluloseabbau zu reduzieren. Je höher die Stabilisatorkonzentration, desto geringer ist der Celluloseabbau (DP).

Die Beispiele 13, 14 und 20 befinden sich außerhalb des prognostizierten Lösebereichs: es tritt auch keine Lösung der Cellulose ein. Bei Beispiel 17 waren noch viele ungelöste Faserbruchstücke vorhanden.

Tabelle 1

| Patent-beisp. | Cell. (%) | $H_2O$ (%) | NMMO (%) | GPE (%) | Temperatur (°C) | Behand-lungsdauer (min) *) | Viskosität bei w=0,31 [1/s] in [Pas] | DP |
|---|---|---|---|---|---|---|---|---|
| 1 | 9,8 | 13,4 | 76,8 | 0,02 | 78- 87 | 20- 95 | $2,93.10^2$ | 440 |
| 2 | 14,0 | 13,3 | 72,7 | 0,02 | 87-103 | 25- 85 | $1,11.10^4$ | 580 |
| 3 | 15,3 | 12,1 | 72,6 | 0,02 | 98-105 | 15- 60 | $6,06.10^3$ | 470 |
| 4 | 14,9 | 13,5 | 71,6 | 0,02 | 97-105 | 15- 60 | $5,08.10^3$ | 440 |
| 5 | 13,9 | 14,3 | 69,8 | 0,02 | 89-104 | 15- 60 | $7,10.10^3$ | 510 |
| 6 | 15,2 | 15,3 | 69,5 | 0,02 | 100-104 | 60 | $1,04.10^4$ | 550 |
| 7 | 15,0 | 18,5 | 66,5 | 0,08 | 100-104 | 55 | $1,29.10^4$ | 590 |
| 8 | 18,3 | 12,1 | 69,6 | 0,02 | 83-107 | 20- 85 | $8,10.10^3$ | 320 |
| 9 | 22,0 | 14,8 | 65,2 | 0,02 | 99-105 | 20- 60 | $9,88.10^3$ | 340 |
| 10 | 21,2 | 12,0 | 66,8 | 0,02 | 89-105 | 20- 60 | $9,38.10^3$ | 330 |
| 11 | 20,7 | 12,6 | 66,7 | 0,02 | 98-105 | 15- 60 | $1,40.10^4$ | 230 |
| 12 | 21,7 | 11,1 | 67,2 | 0,08 | 110 | 15- 70 | $1,02.10^4$ | 310 |
| 13. | 20,0 | 17,5 | 62,5 | 0,08 | 107-112 | 90 | $3,36.10^2$ | 330 |
| 14 | 20,0 | 27,0 | 53,0 | 0,08 | 108-115 | 115 | $1,61.10^3$ | 220 |
| 15 | 22,8 | 11,0 | 66,2 | 0,02 | 73-115 | 20- 40 | $1,37.10^4$ | 220 |
| 16 | 25,8 | 9,9 | 64,3 | 0,02 | 110-119 | 15- 70 | $2,63.10^3$ | 200 **) |
| 17 | 24,4 | 16,4 | 59,2 | 0,02 | 110-120 | 15- 70 | $9,45.10^3$ | 190 |
| 18 | 26,3 | 9,7 | 64,0 | 0,02 | 110-120 | 15- 70 | $1,50.10^4$ | 190 |
| 19 | 30,2 | 8,6 | 61,2 | 0,02 | 115-120 | 15- 90 | nicht meßbar | 200 |
| 20 | 35,0 | 11,5 | 53,5 | 0,08 | 115-120 | 15- 90 | nicht meßbar | keine Lösung |
| 21 | 9,6 | 12,9 | 77,5 | – | 95- 98 | 30-300 | $5,85.10^1$ | 380 |

*) Lösebeginn - Löseende

**) Meßtemperatur: 105 °C

Beispiele 22 bis 27:

In einem 1l-Rührbehälter wird aus einer Suspension, bestehend aus einer 60%-igen wässerigen NMMO-Lösung, Cellulose und 0,01 % GPE als Stabilisator, Wasser im Vakuum abdestilliert (siehe Tabelle 2). Die Lösungsbildung wird anhand der Viskositätserhöhung (Leistungsaufnahme des Rührers) bzw. unter dem Mikroskop verfolgt.

Die genauen Versuchsparameter und die Ergebnisse sind in Tabelle 2 zusammengefaßt.

Erklärung:

1. Zeile: Beginn der Lösungsbildung (Anstieg der Viskosität): Zeit = 0; bis dahin wurde schon eine gewisse Menge Wasser abgedampft - siehe Zusammensetzung

2. Zeile: Zeit = XX; Ende des Lösevorganges

Tabelle 2

| Beispiel | Zeit | eingesetzte Menge (g) | | | | abdest | Lösungszusammensetzung | | |
|---|---|---|---|---|---|---|---|---|---|
| | | Cell | H2O | NMMO | Summe | H2O | Cell% | H2O% | NMMO% |
| Cellulose: Buckeye V5 | | | | | | | | | |
| 22 | 0 | 30 | 160 | 486 | 676 | 166 | 4,44% | 23,67% | 71,89% |
| | 20 | 30 | 143 | 486 | 659 | 183 | 4,55% | 21,70% | 73,75% |
| 23 | 0 | 42 | 168 | 480 | 690 | 156 | 6,09% | 24,35% | 69,56% |
| | 30 | 42 | 140 | 480 | 662 | 184 | 6,34% | 21,15% | 72,51% |
| 24 | 0 | 54 | 162 | 477 | 693 | 296 | 7,79% | 23,38% | 68,83% |
| | 25 | 54 | 125 | 477 | 656 | 333 | 8,23% | 19,05% | 72,72% |
| Altpapier | | | | | | | | | |
| 25 | 0 | 30 | 160 | 486 | 676 | 166 | 4,44% | 23,67% | 71,89% |
| | 20 | 30 | 143 | 486 | 659 | 183 | 4,55% | 21,70% | 73,75% |
| 26 | 0 | 42 | 168 | 480 | 690 | 156 | 6,09% | 24,35% | 69,56% |
| | 30 | 42 | 140 | 480 | 662 | 184 | 6,34% | 21,15% | 72,51% |
| Avicell | | | | | | | | | |
| 27 | 0 | 90 | 115 | 390 | 595 | 149 | 15,1% | 19,3% | 65,6% |
| | 30 | 90 | 92 | 390 | 573 | 172 | 15,7 | 16,1% | 68,2% |

Beispiel 28: Spinnversuch, 5l-Rührbehälter

In einem 5l-Rührbehälter wird aus einer Suspension bestehend aus einer 60%-igen wässerigen NMMO-Lösung,Cellulose (Buckeye V5-Zellstoff) und GPE, Wasser im Vakuum abdestilliert. Nach zirka 3 h wurden dabei 3000 g Lösung mit folgender Zusammensetzung erhalten:
9,0 % Cellulose (Buckeye V5)
18,3 % Wasser
79,5 % NMMO
0,02% GPE
Lösungstemperatur : 94 - 96 $^\circ$ C
Komplexe Viskosität der Spinnmasse bei 95 $^\circ$ C
(RV20, Oszillation bei einer Winkelgeschwindigkeit w = 0,31 1/s): 550 Pa.s
Scherrate: 500$^1$/s
Diese Lösung wurde mit 10 g/min durch eine 100 Loch/130 um-Düse gepreßt, im Luftspalt verzogen und in einem Fällbad koaguliert, wobei Fasern erhalten wurden.

Beispiel 29: Spinnversuch, 5l-Rührbehälter

In einem 5l-Rührbehälter wird aus einer Suspension, bestehend aus einer 60%-igen wässerigen NMMO-Lösung und Cellulose, Wasser im Vakuum abdestilliert. Nach zirka 5 h wurden dabei 3000 g Lösung mit folgender Zusammensetzung erhalten:
15,9 % Cellulose (Avicell, DP = 170)
14,4 % Wasser
69,7 % NMMO
0,02% GPE
Lösungstemperatur: 94 - 96 $^\circ$ C
Komplexe Viskosität der Spinnmasse bei 95 $^\circ$ C
(RV20, Oszillation bei w = 0,31 1/s): 293 Pa.s

7

Scherrate: 500 s$^{-1}$

Diese Lösung wurde mit 10 g/min durch eine 100 Loch/130 µm-Düse gepreßt, in einem 2 cm Luftspalt verzogen und in einem Fällbad koaguliert. Die dabei erhaltene Faser hatte folgende Eigenschaften:

```
                              Avicell

    Titer (dtex)                          4,8

    Faserfestigkeit (konditioniert) (cN/tex)   23

    Faserdehnung (konditioniert) (%)       8,2
```

Beispiel 3O: Spinnversuch, 501-Rührbehälter

2276 g eines Buchensulfitzellstoffs (Feststoff- oder Trockengehalt 94%, DP 750, $\alpha$ = 90%) und 0,02 % GPE als Stabilisator werden in 26139 g 60%-iger wässeriger N-Methylmorpholinoxid-Lösung suspendiert und während 2 h bei 100 °C und einem Vakuum von 50 bis 300 mbar 9415 g Wasser abdestilliert. Die dabei entstandene Lösung wird anhand der Viskosität und unter dem Mikroskop beurteilt.
Scherrate: 370 $^1$/s
Lösezeit ... jene Zeit, die insgesamt zum Abdestillieren des Wassers und bis zur Lösungsbildung benötigt wird.

```
    Parameter der Spinnlösung:
    Cellulose %                          9,95
    Wasser    %                          15,4
    NMMO      %                          74,65
    Lösezeit (Stunden, Minuten)           5,25
    Komplexe Viskosität der Spinnmasse bei 95 °C
    (RV20, Oszillation bei w = 0,31 1/s): 1680 Pa.s


    Spinnparameter:
    Spinntemperatur (°C)                  75
    Düsenlochzahl                         589
    Düsenlochdurchmesser (/um)            150
    Luftspalt (mm)                        9
    Fördermenge (g/min)                   103
    Verzug                                8,25
    Abzugsgeschwindigkeit (m/min)         68


    Fasereigenschaften:
    Titer (dtex)                          3,0
    FFk (cN/tex)                          34,6
    FDk (%)                               9,6
```

Beispiel 31 bis 34: Versuche mit Filmtruder

An einem Filmtruder der Firma BUSS (Typ HS-0050: 0,5 m² Fläche, Scherrate zirka 3000 l/s, Spalt: 1,5 mm) in der Schweiz wurden Lösungen hergestellt. Dabei wurde ein Slurry aus 60%-iger wässeriger NMMO-Lösung und Cellulose oben zugeführt und im Vakuum (100 mbar) soviel Wasser abgedampft, bis die unten angeführte Zusammensetzung erreicht wurde:

```
Drehzahl des Rotors:          450 Upm

          Analysendaten

Beispiel Cell Wasser Zell- Heiz- Viskosität*

          %     %    stoff temp. w=0,31 1/s

                          °C   Pa.s

  3 1    8,39  24,64 Bucke- 170   1670

                    ye V5

  3 2    9,95  15,7  Bucke- 185   2360

                    ye V5

  3 3    14,6  13,13 Bucke- 210   9860

                    ye V5

  3 4    8     16    Bu-    220   1970

                    chen-

                    zell-

                    stoff

                    DP=750

                    =90%
```

Viskosität* ... komplexe Viskosität: gemessen bei einer Winkelgeschwindigkeit von 0,31 1/s, gemessen im Oszillationsmodus an einem HAAKE RV20 bei 95°C.

Die mittlere Verweilzeit der Cellulose betrug etwa 4 min. Nach rheologischen Gesichtspunkten handelt es sich um Lösungen. Manche sind etwas trüb, d.h. daß ungelöste Anteile enthalten sind.

Beispiel 35 bis 39:

In diesen Beispielen wurde durch DSC-Messungen an NMMO-Monohydrat und cellulosischen Lösungen die Zersetzungstemperatur bestimmt. Von diesem Beispielen liegt nur Beispiel 40 im erfindungsgemäßen Bereich. Die Ergebnisse sind in Tabelle 3 zusammengefaßt. Darin bedeutet:

Beginn ...      der Zersetzung (Initialtemperatur)
Maximum ..    Temperatur, bei der die Exothermie ihr Maximum durchschreitet
Ende ....        der Exothermie

Tabelle 3

Temperaturen $^\circ$C

| Beispiel | Cell % | NMMO % | Wasser % | Beginn | Maximum | Ende |
|---|---|---|---|---|---|---|
| 35($NMMO.H_2O$ – | | 87,7 | 13,3 | 197 | 233 | 240 |
| 36 | 9 | 77,5 | 13,5 | 190 | 225 | 236 |
| 37 | 10 | 78,0 | 12,0 | 184 | 212 | 230 |
| 38 | 23 | 72,0 | 5,0 | 164 | 205 | 218 |
| 39 | 23 | 66,0 | 11,0 | 173 | 217 | 230 |

Cellulose in der Lösung reduziert die Initialtemperatur der Zersetzung (vgl. mit Beispiel 36). Bei Lösungen mit höherer Wasserkonzentration bei den entsprechenden Cellulosekonzentrationen werden höhere Initialtemperaturen erreicht.

**Patentansprüche**

1. Verfahren zur Herstellung einer Lösung von Cellulose in N-Methylmorpholin-N-oxid und Wasser, bei dem die drei Komponenten miteinander vermischt werden, dadurch gekennzeichnet, daß die Mischung Scherraten von 400-3000 s$^{-1}$, vorzugsweise 500-800 s$^{-1}$, unterworfen wird und daß der Masseanteil Cellulose $C_{Cell}$ und der Masseanteil Wasser

$$c_{H_2O}$$

folgende Bedingungen erfüllen:

$$c_{Cell} \; > 0,3469-1,695 \; c_{H_2O} \qquad (III)$$

2. Verfahren nach Anspruch 1, dadurch gekennzeichnet, daß die Temperatur, während die Mischung den Scherraten unterworfen wird, 70-120$^\circ$ C, vorzugsweise etwa 100$^\circ$ C, beträgt.

3. Verfahren nach Anspruch 1 oder 2, dadurch gekennzeichnet, daß einer der Komponenten oder der Mischung 0-1% eines bekannten Stabilisators, wie Gallussäure und deren Ester, speziell Gallussäure-propylester, Brenzkatechin, Ellagsäure, Pyrogallol, Oxalsäure, Phosphorsäure und Natriumhexameta-phosphat zugesetzt wird.

4. Verfahren nach einem der Ansprüche 1 bis 3, dadurch gekennzeichnet, daß zusätzlich folgende Bedingung erfüllt ist:

$$c_{Cell} \leqslant 0,58-2,23 \; c_{H_2O} \qquad\qquad (IV)$$

5. Lösung von Cellulose in N-Methylmorpholin-N-oxid und Wasser, dadurch gekennzeichnet, daß der Masseanteil Cellulose $C_{Cell}$ und der Masseanteil

$$c_{H_2O}$$

folgende Bedingungen erfüllen:

$$c_{Cell} > 0,3469-1,695 \; c_{H_2O}+0,0081 \sqrt{1,65+0,1 \; (100 \; c_{H_2O}-12,76)^2}$$

$$(V)$$

$$c_{Cell} \leqslant 0,58-2,23 \; c_{H_2O} \qquad\qquad (IV)$$

Fig. 1

FIG. 2

FIG. 3